# EUROPEAN PATENT APPLICATION

(11) **EP 4 219 404 A1**
(43) Date of publication of application: **02.08.2023**
(21) Application number: 22154454.7
(22) Date of filing: 01.02.2022
(51) Int. Cl.: C01G 45/12, C01G 53/00, H01M 4/00, H01M 10/00

(54) **PROCESS FOR MAKING A COATED CATHODE ACTIVE MATERIAL, AND CATHODE ACTIVE MATERIALS**

(71) Applicant: BASF SE, 67056 Ludwigshafen am Rhein (DE)
(72) Inventor: Maiti, Sandipan, 5290002 Ramat Gan (IL); Aurbach, Doron, 5290002 Ramat Gan (IL); Sclar, Hadar, 5290002 Ramat Gan (IL); Kondrakov, Aleksandr, 67056 Ludwigshafen (DE)
(74) Representative: BASF IP Association

(57) **Abstract**

Process for making a cathode active material for a lithium ion battery, said process comprising the following steps:
(a) coating a lithiated oxide that has a spinel crystal structure with at least one aromatic di-, tri- or tetracarboxylic acid or with a respective lithium salt or with a combination of at least two of the foregoing, thereby obtaining a precursor,
(b) subjecting said precursor to heat treatment a temperature in the range of from 100 to below 500°C.

## Description

The present invention is directed towards a process for making a cathode active material for a lithium ion battery, said process comprising the following steps:
(a) coating a lithiated oxide that has a spinel crystal structure with at least one aromatic di-, tri- or tetracarboxylic acid or with a respective lithium salt or with a combination of at least two of the foregoing, thereby obtaining a precursor,
(b) subjecting said precursor to heat treatment a temperature in the range of from 100 to below 500°C.

Lithiated transition metal oxides are currently being used as electrode active materials for lithium-ion batteries. Extensive research and developmental work have been performed in the past years to improve properties like charge density, specific energy, but also other properties like the reduced cycle life and capacity loss that may adversely affect the lifetime or applicability of a lithium-ion battery. Additional effort has been made to improve manufacturing methods.

In a typical process for making cathode materials for lithium-ion batteries, first a so-called precursor is being formed by co-precipitating the transition metals as carbonates, oxides or preferably as hydroxides that may or may not be basic. The precursor is then mixed with a source of lithium such as, but not limited to LiOH, Li₂O or Li₂CO₃ and calcined (fired) at high temperatures. Lithium salt(s) can be employed as hydrate(s) or in dehydrated form. The calcination - or firing - generally also referred to as thermal treatment or heat treatment of the precursor - is usually carried out at temperatures in the range of from 600 to 1,000 °C. During the thermal treatment a solid-state reaction takes place, and the electrode active material is formed. The thermal treatment is performed in the heating zone of an oven or kiln.

Extensive research has been performed on improvement of various properties of cathode active materials, such as energy density, charge-discharge performance such as capacity fading, and the like. However, many cathode active materials suffer from limited cycle life and voltage fade. This applies particularly to many Mn-rich cathode active materials. It has been observed that high-manganese materials suffer from Mn leaching in the course of repeated cycling. An increased manganese content may then be detected in the electrolyte and on the anode. A continued leaching of manganese may lead to deterioration of the anode protective layer, also known as the solid electrolyte interface causing parasitic consumption of active lithium and ultimately loss in reversible (cyclable) capacity and cell failure.

Various theories exist about the reason for the capacity fade, and - among others - the surface properties the cathode active materials have been modified, for example by coating with an inorganic oxide or with polymers. All of the suggested solutions leave room for improvement.

In WO 2021/191142, a method is described to coat layered oxides (nickel-cobalt-manganese oxides and the like) with aromatic dicarboxylic acids, aromatic tricarboxylic acids or aromatic tetracarboxylic acids, followed by thermal decomposition of the aromatic di, three- or tetracarboxylic acid. It has been observed that a thin layer of spinel is formed. The manganese leaching is reduced but still leaves room for improvement.

It was an objective of the present invention to provide cathode active materials with low capacity fading and thus a high cycling stability. It was further an objective to provide a process for making cathode active materials with both a low capacity fading and thus a high cycling stability. It was further an objective to provide applications of cathode active materials with low capacity fading and thus a high cycling stability.

Accordingly, the process defined at the outset has been found, hereinafter also referred to as inventive process or process according to the present invention.

The inventive process comprises the following steps (a) and (b), hereinafter also referred to as step (a) and step (b) or briefly as (a) or (b), respectively:
(a) coating a lithiated oxide that has a spinel crystal structure with at least one aromatic di-, tri- or tetracarboxylic acid or with a respective lithium salt or with a combination of at least two of the foregoing, thereby obtaining a precursor,
(b) subjecting said precursor to heat treatment a temperature in the range of from 100 to below 500°C.

Steps (a) and (b) will be described in more detail below.

Step (a) starts off from a lithiated oxide that has a spinel crystal structure. Such oxides have an idealized formula of LiTM₂O₄, with TM referring to metals, preferably transition metals that allow the respective oxidation state(s).

In a preferred embodiment, said lithiated oxide is selected from LiMn₂O₄ and spinels of an idealized formula LiNi_{0.5}Mn_{1.5}O₄, each doped or non-doped. Dopants may be present in a molar amount in the range of from 0.1 to 3 mol-%, referring to the metal content - other than lithium - of the respective lithiated oxide with spinel structure.

Examples of dopants are Na⁺, Mg²⁺, Al³⁺, Ti⁴⁺, Cr³⁺, Fe³⁺, Zn²⁺, and Co³⁺ and combinations of at least two of the aforementioned.

Said lithiated oxide with spinel structure may contain traces of further metal ions, for example traces of ubiquitous metals such as sodium, calcium or zinc, as impurities but such traces will not be taken into account in the description of the present invention. Traces in this context will mean amounts of 0.05 mol-% or less, referring to the total metal content of non-lithium metals in lithiated oxide with spinel structure. Such traces are not counted as dopants in the context of the present invention.

If present, said dopant may be dispersed homogeneously or unevenly in particles lithiated oxide with spinel structure. Preferably, such dopant is distributed unevenly in particles of such mixed lithiated oxide with spinel structure, even more preferably as a gradient, with the concentration of dopant in the outer shell being higher than in the center of the particles.

In one embodiment of the present invention, lithiated oxide with spinel structure has an average particle diameter (D50) in the range of from 3 to 20 µm, preferably from 5 to 16 µm. The average particle diameter may be determined, e. g., by dynamic light scattering or LASER diffraction or electroacoustic spectroscopy. The particles are usually composed of agglomerates from primary particles, and the above particle diameter refers to the secondary particle diameter.

In one embodiment of the present invention, mixed oxides with spinel structure have a specific surface (BET) in the range of from 0.1 to 2.0 m²/g. The BET surface may be determined by nitrogen adsorption after outgassing of the sample at 200°C for 30 minutes and, beyond this, according to DIN-ISO 9277:2003-05.

In one embodiment of the present invention, lithiated oxide with spinel structure has a pressed density in the range of from 3.0 to 3.4 g/cm³, determined at a pressure of 250 MPa.

In step (a), such lithiated oxide with spinel structure - hereinafter also referred to as "starting material" - is treated with at least one aromatic di-, tri- or tetracarboxylic acid, hereinafter also referred to as "aromatic carboxylic acid", or with a respective lithium salt, hereinafter in general also referred to in general as "lithium salt of aromatic carboxylic acid". Aromatic carboxylic acids used in step (a) may be based on benzene or on naphthalene, for example naphthalene 2,6-dicarboxylic acid or naphthalene 2,7-dicarboxylic acid, di-, tri- or tetracarboxylic acids of benzene being preferred. Aromatic carboxylic acids used in step (a) may bear one or two substituents other than COOH groups, for example methyl groups, but preferably they do not bear substituents other than COOH groups. Preferred examples of aromatic dicarboxylic acids are phthalic acid, isophthalic acid and terephthalic acid and mixtures of at least two of the foregoing. Preferred examples of tricarboxylic acid are benzene-1,2,3-tricarboxylic acid and benzene-1,2,4-tricarboxylic acid, trimesic acid (see below) being preferred

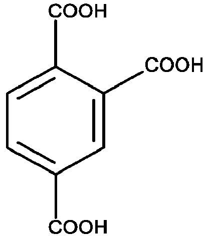

Preferred example of tetracarboxylic acids is benzene 1,2,4,5-tetracarboxylic acid.

Most preferred example of dicarboxylic acids is terephthalic acid, and most preferred example of tricarboxylic acids is trimesic acid.

Lithium salts of aromatic carboxylic acids may refer to monolithium salts, dilithium salts, trilithium salts, if applicable, for example the trilithium salt of trimesic acid, and tetralithium salts, if applicable. Examples are
- the mono- and the dilithium salt of phthalic acid,
- the mono- and the dilithium salt of isophthalic acid,
- the mono- and the dilithium salt of terephthalic acid,
- the mono-, the di- and the trilithium salt of trimesic acid, and
- the mono, the di-, the tri- and the tetralithium salt of benzene 1,2,4,5-tetracarboxylic acid.

The fully lithiated species are in each case preferred, thus, the dilithium salt of phthalic acid, the dilithium salt of isophthalic acid, the dilithium salt of terephthalic acid, the trilithium salt of trimesic acid, and the tetralithium salt of benzene 1,2,4,5-tetracarboxylic acid.

In one embodiment of the present invention, an amount of 0.1 to 5% by weight of aromatic carboxylic acid or lithium salt of aromatic carboxylic acid is used in step (a), preferably 0.5 to 3% by weight, referring to starting material.

Preferably, aromatic carboxylic acid or lithium salt of aromatic carboxylic acid is applied in solution, for example in an organic solvent, for example alcohols such as methanol, ethanol, and iso-propanol, and hydrocarbons such as toluene, xylene, n-heptane, furthermore acetonitrile. Alcohols such as methanol, ethanol, and iso-propanol are preferred.

In one embodiment of the present invention, the concentration of aromatic carboxylic acid - or of lithium salt of aromatic carboxylic acid - in such organic solvent is in the range of from 0.1 to 100 g/l, preferably 0.2 to 50 g/l. Most of the aromatic carboxylic acids and even the lithium salts of the aromatic carboxylic acids display a low solubility in many solvents. For the purpose of step (a), they may be provided as dispersions in such organic solvent.

Said coating of starting material with aromatic carboxylic acid(s) or lithium salt of aromatic carboxylic acid according to step (a) is - preferably in the presence of an organic solvent - carried out by combining starting material and aromatic carboxylic acid - or lithium salt of aromatic carboxylic acid - in a vessel, followed by a mixing operation such as stirring or shaking. Suitable vessels are tank reactors, plough share mixers, free-fall mixers, tumble mixers, and especially ball mills. For laboratory scale experiments, roller mills or mortars with pestles may be applied as well.

In one embodiment of the present invention, 1 to 250 g of starting material are introduced per 2.5 liter of solution of aromatic carboxylic acid or lithium salt of aromatic carboxylic acid in such organic solvent, preferably 10 to 150 g. If the amount of organic solvent is higher, the process may become uneconomic due to the high capacity of vessels needed.

In one embodiment of the present invention, step (a) is carried out at elevated temperature, for example at 50 to 100°C, preferably 70 to 95°C, even more preferably to the boiling point of the organic solvent used.

In the course or at the end of step (a), the organic solvent - if present - will be evaporated. It is preferred to distill off the organic solvent in the course of step (a).

In one embodiment of the present invention, step (a) is carried out at ambient pressure, preferably at the pressure that allows the organic solvent to evaporate completely.

In one embodiment of the present invention, the duration of step (a) is in the range of from one to two hours.

To perform step (b) of the inventive process, the mixture obtained according to step (c) is heated at a temperature in the range of from 100 to below 500°C, for example 250 to 495°C, preferably 300 to 450°C.

In embodiments wherein a lithium salt of aromatic carboxylic acid is used in step (a), a temperature in the range of from 250 to 400°C is preferred in step (b). In embodiments wherein an aromatic carboxylic acid is used in step (a) at a temperature in the range of from 100 to 300°C is preferred is preferred in step (b).

Step (b) may be performed in an oxygen-containing atmosphere. Oxygen-containing atmosphere includes an atmosphere of air, of pure oxygen, of mixtures from oxygen with air, and of air diluted with an inert gas such as nitrogen. In step (b), an atmosphere of oxygen or oxygen diluted with air or nitrogen and a minimum content of oxygen of 21 vol.-% is preferred.

It is preferred, though, to perform step (b) in a non-oxidizing atmosphere, for example under nitrogen or a rare gas, especially under argon. Preferred is argon.

In order to remove gaseous reaction products from step (b), it is preferred to perform step (b) with an exchange of the atmosphere, for example under a flow of gas.

Step (b) of the inventive process may be performed in a furnace, for example in a rotary tube furnace, in a muffle furnace, in a pendulum furnace, in a roller hearth furnace or in a push-through furnace. Combinations of two or more of the aforementioned furnaces are possible as well.

Step (b) of the inventive process can be performed over a period of 30 minutes to 24 hours, preferably 1 to 12 hours. Step (b) can be effected at a constant temperature level, or a temperature profile can be run.

During the temperature changes, a heating rate of 1 K/min up to 10 K/min can be obtained, preferred is 2 to 5 K/min.

After step (b), it is preferred to cool down the material obtained to ambient temperature. A cathode active material is obtained. Cathode active materials made according to the inventive process display a low capacity fading and thus a high cycling stability.

Without wishing to be bound by any theory, we assume structural changes of cathode active materials themselves and parasitic reactions at the interface between cathode active material and electrolyte interface are responsible for capacity fading. We further assume that by performing the inventive process, a protective surface layer is formed on the primary particles via an acid-based reaction, resulting in formation of a lithiated salt of the aromatic di-, tri- or tetracarboxylic acid that covers the core material.

A further aspect of the present invention is a cathode active material with a spinel structure, wherein the material is composed from secondary particles that are agglomerates of primary particles and wherein the primary particles of said mixed oxide are covered with mixture containing a lithium nickel oxide with a cubic crystal structure and having the formula Liₓ₂Ni₂₋ₓ₂O₂ with zero ≤ x2 ≤ 0.5 and with Li₂CO₃. Said cathode active material is hereinafter also referred to as "inventive cathode active material". Optionally, said layer also comprises a spinel containing lithium and nickel, for example LiNi₂O₄.

Preferably, zero < x2 ≤ 0.4.

A specific preferred material of formula Lix2Ni2-x2O2 is Li0.4Ni1.6O2.

An example of spinel in said layer is Li1+x3M22-x3O4-x4 with x3 and x4 being independently in the range of from zero to 0.4, and M2 being Ni or a combination of Ni and Mn.

It is observed that the amount of compound Liₓ₂Ni₂₋ₓ₂O₂ exceeds the amounts of lithium carbonate and of spinel. In one embodiment of the present invention, in said layer, the ratio is in the range of from 70:25:05 to 65:27:08.

The term "cover" in the above context does not only refer to a complete and homogeneous layer but also to layers that may have a varying thickness in different parts of the same primary particle.

In one embodiment of the present invention, the average thickness of the aforementioned layer is in the range of from 5 to 50 nm, preferably 10 to 40 nm. The existence of said layer and its thickness may be shown and deduced from a combination of X-ray diffraction ("XRD"), X-ray photoelectron spectroscopy ("XPS") and Scanning Electron Spectroscopy ("SEM"). By said tools, said layer has a homogeneous appearance.

As with the starting material in step (a) of the inventive process, inventive cathode active material may contain traces of further metal ions, for example traces of ubiquitous metals such as sodium, calcium or zinc, as impurities but such traces will not be taken into account in the description of the present invention. Traces in this context will mean amounts of 0.05 mol-% or less, referring to the total metal content of with exception of lithium.

In inventive cathode active material, any dopant - if applicable - may be dispersed homogeneously or unevenly in particles of inventive cathode active material. Preferably, such dopant is distributed unevenly in particles of such inventive cathode active material, even more preferably as a gradient, with the concentration of dopant in the outer part being higher than in the center of the particles.

In one embodiment of the present invention, inventive cathode active material has an average particle diameter D50 in the range of from 3 to 20 µm, preferably from 5 to 16 µm. The average particle diameter may be determined, e. g., by light scattering or LASER diffraction or electroacoustic spectroscopy. The particles are composed of agglomerates from primary particles, and the above particle diameter refers to the secondary particle diameter.

In one embodiment of the present invention, inventive cathode active materials have a surface (BET) in the range of from 0.1 to 2.0 m2/g. The BET surface may be determined by nitrogen adsorption after outgassing of the sample at 200°C for 30 minutes and, beyond this, according to DIN-ISO 9277:2003-05.

Inventive cathode active materials display a low capacity fading and thus a high cycling stability. The show only reduced manganese leaching.

A further aspect of the present invention refers to cathodes, hereinafter also referred to as inventive cathodes. Inventive cathodes comprise
(A) at least one inventive cathode active material,
(B) carbon in electrically conductive form,
(C) at least one binder.

In a preferred embodiment of the present invention, inventive cathodes contain
(A) 80 to 99 % by weight inventive cathode active material,
(B) 0.5 to 19.5 % by weight of carbon,
(C) 0.5 to 9.5 % by weight of binder,
percentages referring to the sum of (A), (B) and (C).

Cathodes according to the present invention contain carbon in electrically conductive modification, in brief also referred to as carbon (B). Carbon (B) can be selected from soot, active carbon, carbon nanotubes, graphene, and graphite. Carbon (B) can be added as such during preparation of electrode materials according to the invention.

Electrodes according to the present invention can comprise further components. They can comprise a current collector (D), such as, but not limited to, an aluminum foil. They further comprise a binder (C), hereinafter also referred to as binder (C) or binder polymer. Current collector (D) is not further described here.

Suitable binders (C) are preferably selected from organic (co)polymers. Suitable (co)polymers, i.e. homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopoly-ethylene, but also copolymers of ethylene which comprise at least 50 mol% of copolymerized ethylene and up to 50 mol% of at least one further comonomer, for example α-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, C₁-C₁₀-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol% of copolymerized propylene and up to 50 mol% of at least one further comonomer, for example ethylene and α-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, C₁-C₁₀-alkyl esters of (meth)acrylic acid, divinylbenzene, especially 1,3-divinylbenzene, 1,2-diphenylethylene and α-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an average molecular weight M_{w} in the range from 50,000 to 1,000,000 g/mol, preferably to 500,000 g/mol.

Binder (C) may be cross-linked or non-cross-linked (co)polymers.

In a particularly preferred embodiment of the present invention, binder (C) is selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

A further aspect of the present invention is an electrochemical cell, containing
(1) a cathode comprising inventive cathode active material (A), carbon (B), and binder (C),
(2) an anode, and
(3) at least one electrolyte.

Embodiments of cathode (1) have been described above in detail.

Anode (2) may contain at least one anode active material, such as carbon (graphite), TiO₂, lithium titanium oxide, silicon or tin. Anode (2) may additionally contain a current collector, for example a metal foil such as a copper foil.

Electrolyte (3) may comprise at least one non-aqueous solvent, at least one electrolyte salt and, optionally, additives.

Non-aqueous solvents for electrolyte (3) can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-C₁-C₄-alkylene glycols and in particular polyethylene glycols. Polyethylene glycols can here comprise up to 20 mol% of one or more C₁-C₄-alkylene glycols. Polyalkylene glycols are preferably polyalkylene glycols having two methyl or ethyl end caps.

The molecular weight M_{w} of suitable polyalkylene glycols and in particular suitable polyethylene glycols can be at least 400 g/mol.

The molecular weight M_{w} of suitable polyalkylene glycols and in particular suitable polyethylene glycols can be up to 5,000,000 g/mol, preferably up to 2,000,000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and, in particular, 1,3-dioxolane.

Examples of suitable acyclic organic carbonates are dimethyl carbonate, ethyl methyl carbonate and diethyl carbonate.

Examples of suitable cyclic organic carbonates are compounds of the general formulae (II) and (III) 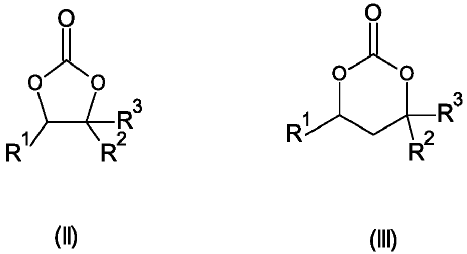 where R¹, R² and R³ can be identical or different and are selected from among hydrogen and C₁-C₄-alkyl, for example methyl, ethyl, n-propyl, isopropyl, n-butyl, isobutyl, sec-butyl and tert-butyl, with R² and R³ preferably not both being tert-butyl.

In particularly preferred embodiments, R¹ is methyl and R² and R³ are each hydrogen, or R¹, R² and R³ are each hydrogen.

Another preferred cyclic organic carbonate is vinylene carbonate, formula (IV).

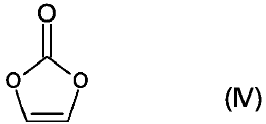

The solvent or solvents is/are preferably used in the water-free state, i.e. with a water content in the range from 1 ppm to 0.1% by weight, which can be determined, for example, by Karl-Fischer titration.

Electrolyte (3) further comprises at least one electrolyte salt. Suitable electrolyte salts are, in particular, lithium salts. Examples of suitable lithium salts are LiPF₆, LiBF₄, LiClO₄, LiAsFe, LiCF₃SO₃, LiC(CₙF₂ₙ₊₁SO₂)₃, lithium imides such as LiN(CₙF₂ₙ₊₁SO₂)₂, where n is an integer in the range from 1 to 20, LiN(SO₂F)₂, Li₂SiF₆, LiSbF₆, LiAlCl₄ and salts of the general formula (CₙF₂ₙ₊₁SO₂)ₜYLi, where m is defined as follows:
t = 1, when Y is selected from among oxygen and sulfur,
t = 2, when Y is selected from among nitrogen and phosphorus, and
t = 3, when Y is selected from among carbon and silicon.

Preferred electrolyte salts are selected from among LiC(CF₃SO₂)₃, LiN(CF₃SO₂)₂, LiPF₆, LiBF₄, LiClO₄, with particular preference being given to LiPF₆ and LiN(CF₃SO₂)₂.

In a preferred embodiment of the present invention, electrolyte (3) contains at least one flame retardant. Useful flame retardants may be selected from trialkyl phosphates, said alkyl being different or identical, triaryl phosphates, alkyl dialkyl phosphonates, and halogenated trialkyl phosphates. Preferred are tri-C₁-C₄-alkyl phosphates, said C₁-C₄-alkyls being different or identical, tribenzyl phosphate, triphenyl phosphate, C₁-C₄-alkyl di- C₁-C₄-alkyl phosphonates, and fluorinated tri-C₁-C₄-alkyl phosphates,

In a preferred embodiment, electrolyte (3) comprises at least one flame retardant selected from trimethyl phosphate, CH₃-P(O)(OCH₃)₂, triphenylphosphate, and tris-(2,2,2-trifluoroethyl)-phosphate.

Electrolyte (3) may contain 1 to 10% by weight of flame retardant, based on the total amount of electrolyte.

In an embodiment of the present invention, batteries according to the invention comprise one or more separators (4) by means of which the electrodes are mechanically separated. Suitable separators (4) are polymer films, in particular porous polymer films, which are unreactive toward metallic lithium. Particularly suitable materials for separators (4) are polyolefins, in particular film-forming porous polyethylene and film-forming porous polypropylene.

Separators (4) composed of polyolefin, in particular polyethylene or polypropylene, can have a porosity in the range from 35 to 50%. Suitable pore diameters are, for example, in the range from 30 to 500 nm.

In another embodiment of the present invention, separators (4) can be selected from among PET nonwovens filled with inorganic particles. Such separators can have a porosity in the range from 40 to 55%. Suitable pore diameters are, for example, in the range from 80 to 750 nm.

Batteries according to the invention can further comprise a housing which can have any shape, for example cuboidal or the shape of a cylindrical disk. In one variant, a metal foil configured as a pouch is used as housing.

Batteries according to the invention provide a very good discharge and cycling behavior, in particular at high temperatures (30 °C or higher, for example up to 60°C) in particular with respect to the capacity loss.

Batteries according to the invention can comprise two or more electrochemical cells that combined with one another, for example can be connected in series or connected in parallel. Connection in series is preferred. In batteries according to the present invention, at least one of the electrochemical cells contains at least one electrode according to the invention. Preferably, in electrochemical cells according to the present invention, the majority of the electrochemical cells contain an electrode according to the present invention. Even more preferably, in batteries according to the present invention all the electrochemical cells contain electrodes according to the present invention.

The present invention further provides for the use of batteries according to the invention in appliances, in particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The present invention is further illustrated by working examples.

### General remark: rpm: revolution per minute

Percentages are % by weight unless expressly noted otherwise

The pressed density was determined at 250 MPa
(ac.1): trimesic acid
(ac.2): terephthalic acid

The structural characterizations were carried out via the X-ray diffraction technique (Bruker D8 Advanced X-ray diffractometer, CuKa radiation). The intensities were recorded in the range of 2θ= 10° - 80°, with steps of ≈0.0194 deg./min. A standard least-square refinement procedure was taken to calculate the unit cell parameters. Morphological micrographs were analyzed by Scanning Electron Microscopy (SEM). Transmission Electron Microscopy (TEM) studies were carried out with a LaB₆-200 kV Jeol-2100 instrument operated at 200 kV. These studies were performed in TEM mode using conventional selected area diffraction (SAED) and Convergent Beam Electron Diffraction (CBED) technique. X-ray Photoelectron Spectroscopy (XPS) measurements were carried out using UHV (2.5×10 ⁻¹⁰ Torr base pressure) using 5600 Multi-Technique System (PHI, USA). The DSC analyses were carried out in the range between room temperature and 350 °C (DSC 3+ STARe System, METTLER TOLEDO) using closed reusable high pressure gold-plated stainless steel crucibles (30 µl in volume). Chemical analysis of the transition metals dissolution from the cathode after 400 cycles was performed by the Inductive Coupled Plasma technique (SPECTRO ARCOS ICP-OES Multi-view FHX22). The lithium anodes after 400 cycles were dissolved in 10 ml of ice-cold double-distilled (DD) water for the measurement.

### I. Synthesis of a base material, B-CAM 1

### I.1 Synthesis of a precursor, TM-OH.1 and of lithium salts of aromatic carboxylic acids

The precipitation reaction was performed at 50°C under a nitrogen atmosphere using a continuous stirred tank reactor with a volume of 50 I. An aqueous metal solution containing NiSO4 and MnSO4 (molar ratio 25:75), aqueous sodium hydroxide (25wt% NaOH) and aqueous ammonia solution (25wt% ammonia) were simultaneously introduced into the stirred tank reactor. The sum of volume flows was set to adjust the mean residence time to 11.1 hours. The flow rate of the NaOH was adjusted by a pH regulation circuit to keep the pH value in the stirred tank reactor at a constant value of 11.4. The resulting product dispersion contained about 120 g/l mixed hydroxide of Ni and Mn with an average particle size (D50) of 12.5 µm, TM-OH.1.

### I.2 Calcination

TM-OH.1 was mixed with LiOH·H₂O at a molar ratio of Li : TM of 1:2 and calcined at 650 and 820 °C with a dwell time of 6 hours in a flow of pure oxygen. Particulate B-CAM.1 was obtained and sieved using a mash size of 32 µm. The average particle size (D50) of B-CAM.1 was 12.5 µm.

### I.3 Synthesis of the trilithum salt of trimesic acid, (ac.1)-Li₃

In a typical synthesis procedure, (ac.1)-Li₃ was synthesized in absolute ethanol by reacting trimesic acid (50 mmol, 10.5 g, (ac.1)) and LiOH (150 mmol, 4.0 g) for 12 h at 80 °C in a closed glass container under constant stirring (500 rpm). A milky white suspension appeared instantly. A milky suspension was obtained. The solid was removed by filtration and washed thrice with ethanol and dried at 80 °C under vacuum.

### II. Combination of B-CAM.1 with aromatic di- or tricarboxylic acid or respective lithium salts and thermal treatment

### II.1 Treatment with (ac.1), step (a.1)

A 250 ml cylindrical plastic bottle was charged with 20 ml of a 3% by weight dispersion of (ac.1) in ethanol. An amount of 10 g of B-CAM.1. was added, followed by addition of cylindrical zirconia balls. Then, mixing was done on a roller mixer for two hours at 500 rpm. The, the ethanol was evaporated in an air oven until a free-flowing powder was obtained. Said dry powder was then milled on the roller mixer for another 15 minutes at 500 rpm. A precursor was obtained.

### 11.2 Thermal treatment, step (b.1)

The precursor from step (a.1) was then subjected to heat treatment at 250°C in a roto-vap for 2 hours under a constant forced flow of nitrogen. After deagglomeration, inventive CAM.1 was obtained as a free-flowing powder, average particle diameter (D50) 12.5 µm.

Inventive CAM.1 was analyzed by XRD, XPS and SEM. An amorphous layer of trimesic acid could be detected on the primary particles. TEM studies reveal the presence of a coating layer with a thickness of -10 to 40 nm, appearing homogeneous.

### 11.3 Treatment with the trilithium salt of trimesic acid (ac.1)-Li₃, step (a.3),

The protocol of 11.1 was followed but with (ac.1)-Li₃. A dry powder was obtained.

### II.4 Thermal treatment, step (b.3)

The powder from step (a.2) was then subjected to heat treatment at 400°C a roto-vap for 2 hour under a constant forced flow of nitrogen. After deagglomeration, inventive CAM.3 was obtained as a free-flowing powder, average particle diameter (D50) 12.5 µm.

Inventive CAM.3 was analyzed by XRD and SEM. An amorphous layer could be detected on the primary particles. TEM studies reveal the presence of a coating layer with a thickness of -10 to 40 nm, appearing homogeneous.

The protocols are summarized in Table 1.

**Table 1: Manufacturing conditions of inventive cathode active materials**

| CAM | Acid or salt | Amount (wt.-%) | Temperature [°C] in step (b) |
|---|---|---|---|
| B-CAM.1 | - | - | - |
| CAM.1 | (ac.1) | 3 | 250 |
| CAM.2 | (ac.1) | 5 | 250 |
| CAM.3 | (ac.1)-Li₃ | 3 | 400 |
| CAM.4 | (ac.1)-Li₃ | 5 | 400 |

### III. Testing

Positive electrode: PVDF binder (Solef^{®} 5130) was dissolved in NMP (Merck) to produce a 10 wt.% solution. For electrode preparation, binder solution (3.5 wt.%), carbon black (Super C65, 4 wt.-%) were slurried in NMP. After mixing using a planetary centrifugal mixer (ARE-250, Thinky Corp.; Japan), either any of inventive CAM.1 to CAM.4 or a comparative cathode active material, for example B-CAM.1 (92.5 wt.%) was added and the suspension was mixed again to obtain a lump-free slurry. The slurry was coated onto 15 µm thick Al foil using a Erichsen auto coater, followed by drying at 120°C for 15 minutes at ambient pressure and then at 120°C for 4 hours *in vacuo.* The loading was 8 to 10 mg/cm². All electrodes were dried at 120°C for 12 hours. Prior to further use, all electrodes were calendared.

A polypropylene separator commercially available from Cellgard was used.

### III.1 Electrolyte Manufacture

A base electrolyte composition was prepared containing 1M LiPF₆, 3:7 (w/w) ethylene carbonate : ethylmethyl carbonate.

### III.2 Coin-type half cell manufacture

Coin-type half cells (23 mm in diameter and 2.5 mm in thickness) comprising a cathode prepared as described under II.1 and lithium metal as working and counter electrode, respectively, were assembled and sealed in an Ar-filled glove box. In addition, the cathode and anode and a separator were superposed in order of cathode // separator // Li foil to produce a half coin cell. Thereafter, 0.06 mL of the EL base 1 which is described above (III.1) were introduced into the coin cell.

The results are summarized in Tables 2 and 3.

**Table 2: Electrochemical testing of inventive cathode active materials at 30°C and of a comparative sample**

| (1 C discharge) cycle | 10^{th} | 50^{th} | 100^{th} | 150^{th} | 200^{th} | 250^{th} | 300^{th} | 350^{th} | 400^{th} | Q₄₀₀/Q₁₀ [%] |
|---|---|---|---|---|---|---|---|---|---|---|
| B-CAM.1 | 131 | 133 | 131 | 128 | 116 | 105 | 93 | 76 | 50 | 38 |
| CAM.1 | 125 | 126 | 122 | 121 | 120 | 118 | 116 | 114 | 112 | 90 |
| CAM.2 | 102 | 74 | 112 | 113 | 112 | 111 | 110 | 108 | 107 | 105 |
| CAM.3 | 123 | 118 | 118 | 122 | 120 | 115 | 110 | 88 | 75 | 61 |
| CAM.4 | 93 | 100 | 110 | 112 | 111 | 112 | 110 | 109 | 102 | 109 |

All results in mA·h/g

All values were average values from 3 coin cells.

**Table 3: Electrochemical testing at 55 °C of inventive cathode active materials and of a comparative sample**

| (1 C discharge) cycle | 10^{th} | 50^{th} | 100^{th} | 150^{th} | 200^{th} | Q₂₀₀/Q₁₀[%] |
|---|---|---|---|---|---|---|
| B-CAM.1 | 125 | 123 | 94 | 57 | 41 | 41 |
| CAM.1 | 120 | 123 | 117 | 109 | 79 | 66 |
| CAM.2 | 117 | 116 | 109 | 103 | 97 | 83 |
| CAM.3 | 121 | 125 | 122 | 115 | 81 | 67 |
| CAM .4 | 99 | 116 | 114 | 109 | 99 | 100 |

## Claims

1. Process for making a cathode active material for a lithium ion battery, said process comprising the following steps:
(a) coating a lithiated oxide that has a spinel crystal structure with at least one aromatic di-, tri- or tetracarboxylic acid or with a respective lithium salt or with a combination of at least two of the foregoing, thereby obtaining a precursor,
(b) subjecting said precursor to heat treatment a temperature in the range of from 100 to below 500°C.

2. Process according to claim 1 wherein said lithiated oxide is selected from LiMn₂O₄ and spinels of an idealized formula LiNi_{0.5}Mn_{1.5}O₄, each doped or non-doped.

3. Process according to claim 1 wherein said lithiated oxide is non-doped LiNi_{0.5}Mn_{1.5}O₄.

4. Process according to any of the preceding claims wherein such di-carboxylic acid is selected from terephthalic acid or phthalic acid or isophthalic acid and respective lithium salts and mixtures of at least two of the foregoing.

5. Process according to any of claims 1 to 3 wherein such tricarboxylic acid is trimesic acid or a lithium salt of trimesic acid.

6. Process according to any of the preceding claims wherein step (a) is performed with an alcoholic solution of such least one aromatic di-, tri- or tetracarboxylic acid or its respective lithium salt.

7. Process according to any of the preceding steps wherein step (b) is performed under a forced flow of gas.

8. Process according to any of the preceding claims wherein steps (b) is performed in a roller hearth kiln, a pusher kiln or a rotary hearth kiln.

9. Process according to any of the preceding claims wherein step (b) is performed in a non-oxidizing atmosphere.

10. Cathode active material that is a lithiated oxide with spinel crystal structure wherein the wherein the material is composed from secondary particles that are agglomerates of primary particles and wherein the secondary particles of said mixed oxide are coated with a lithium salt of an aromatic di-, tri- or tetracarboxylic acid.

11. Cathode active material according to claim 10 wherein said lithiated oxide is selected from LiMn₂O₄ and spinels of an idealized formula LiNi_{0.5}Mn_{1.5}O₄, each doped or non-doped.

12. Cathode active material according claim 10 or 11 wherein said mixed oxide has an average particle diameter (D50) in the range of from 3 to 20 µm, determined by dynamic light scattering.

13. Cathode active material according to any of the claims 10 to 12 wherein the coating is a layer with a thickness in the range of from 5 to 50 nm.

14. Cathode comprising
(A) at least one cathode active material according to any of the claims 10 to 13,
(B) carbon in electrically conductive form,
(C) at least one binder.

15. Electrochemical cell comprising a cathode according to claim 14.
